# EUROPÄISCHE PATENTANMELDUNG

(11) **EP 1 985 394 A2**
(43) Veröffentlichungstag der Anmeldung: **29.10.2008**
(21) Anmeldenummer: 08006586.5
(22) Anmeldetag: 31.03.2008
(51) Int. Cl.: B23B 27/16, B23C 5/20

(54) **Fräswendeplatte**

(30) Priorität: 26.04.2007 DE 102007019666
(71) Anmelder: Fette GmbH, 21493 Schwarzenbek (DE)
(72) Erfinder: Jacob, Thomas, 21502 Geesthacht (DE)
(74) Vertreter: Hauck Patent- und Rechtsanwälte

(57) **Zusammenfassung**

Fräswendeplatte, die vorzugsweise unter einem von Null verschiedenen Axialwinkel an einem drehbaren Werkzeughalter befestigbar ist und die von einem trapezoiden Plattenkörper gebildet ist, mit einer im wesentlichen planen Auflagefläche, einer dieser gegenüberliegenden im wesentlichen weiteren planen Fläche und mit zwischen diesen ausgebildeten Seitenflächen sowie gegenüberliegenden Schneidkanten mit zugeordneten Spanflächen und an diesen angrenzenden Freiflächen, wobei die Spanflächen durch jeweils eine eingearbeitete Hohlkehle und die Freifläche von je einer Seitenfläche des Plattenkörpers gebildet sind, dadurch gekennzeichnet, daß der Plattenkörper in Form eines gleichseitigen Rhombus vorgesehen ist mit Schneidkanten an allen Kanten des Rhombus, wobei jeder Flachseite jeweils zwei annähernd parallele Schneidkanten mit zugeordneten Spanflächen vorgesehen sind und die Schneidkantenpaare jeweils einer Flachseite unterschiedlichen Kantenpaaren des Rhombus zugeordnet sind.

## Beschreibung

Die Erfindung bezieht sich auf eine Fräswendeplatte nach dem Patentanspruch 1. Insbesondere bezieht sich die Erfindung auf eine Fräswendeplatte für einen sogenannten Eckfräser.

Eckfräser dienen bekanntlich dazu, 90°-Schultern zu formen. Aus EP 0 566 984 ist eine trapezoidale Wendeschneidplatte bekannt geworden mit Schneidkanten an zwei parallelen Kanten mit zugeordneten Spanflächen und an diesen angrenzenden Freiflächen. In die Spanflächen sind Hohlkehlen eingearbeitet, und die Freiflächen sind ballig ausgeführt. Die Wendeplatten werden fest in einem Werkzeughalter, beispielsweise einem Schaft, angeordnet dergestalt, daß die Schneidkante bei Drehung des Werkzeughalters einen Kreis beschreibt. Üblicherweise werden die Wendeplatten in einem Winkel zur Drehachse (Axialwinkel) angeordnet. Dies hat einen unmittelbaren Einfluß auf die Standfestigkeit des Werkzeugs und die Haltbarkeit der Schneidkante, weil ein weiches Schneiden nur bei einem mehr oder weniger großen Axialwinkel erhalten wird.

Bei einem Axialwinkel ungleich Null und gerader Schneidkante kann kein exakter 90°-Winkel gefräst werden, weil voreilendes und nacheilendes Ende der Schneidkante nicht auf einer gemeinsamen Zylinderfläche liegen. Außerdem ändern sich über die Länge der Schneidkante Spanwinkel und Freiwinkel, und gegebenenfalls der Spanwinkel auch dem Vorzeichen nach, was für eine qualitätsvolle Bearbeitung nachteilig ist. Es ist daher auch bereits bekannt geworden, schraubenlinienförmige Schneidkanten zu verwenden.

Aus EP 0 392 730 ist bekannt geworden, der Schneidkante eine Kurvenform zu verleihen, und zwar als Schnittlinie eines ebenen Schnittes durch einen Zylinder.

Der Winkel der Schnittlinie entspricht dem Axialwinkel. Auf diese Weise ist gewährleistet, daß die Schnittkante auf einer Zylinderfläche liegt und mit dem Fräser ein exakter 90°-Winkel hergestellt werden kann.

Fräswendeplatten sind bekanntlich Wegwerfwerkzeuge. Die bekannte Platte kann einmal gewendet und anschließend nicht mehr eingesetzt werden.

Es ist jedoch auch bekannt, Wendeplatten mit vier Schneidkanten zu verwenden. Diese sind quadratisch. Sie haben jedoch folgende Nachteile: Bei Wendeplatten für Eckfräser wird eine lange Schneidkante gewünscht. Um bei quadratischen Wendeschneidplatten die gleiche Länge wie bei Rechteckwendeplatten zu erhalten, müssen die quadratischen Schneidplatten sehr groß gewählt werden. Sie haben daher einen entsprechend großen Schneidradius. Außerdem ist der Materialverbrauch sehr hoch. Ein weiterer Nachteil ist, daß bei quadratischen Wendeschneidplatten die jeweils benachbarte Schneidkante am oberen Ende der Arbeitsschneidkante mit beansprucht wird. Dies ist für den nachfolgenden Schneideinsatz dieser Schneidkante nachteilig.

Der Erfindung liegt die Aufgabe zugrunde, eine Fräswendeplatte mit vier Schneidkanten zu schaffen, die voneinander unabhängig sind. Außerdem soll ein minimaler Materialeinsatz für die Wendeschneidplatte erforderlich sein.

Diese Aufgabe wird durch die Merkmale des Patentanspruchs 1 gelöst.

Bei der erfindungsgemäßen Fräswendeplatte ist der Plattenkörper in Form eines gleichseitigen Rhombus vorgesehen mit Schneidkanten an allen Kanten des Rhombus. Jeder Flachseite ist ein Schneidkantenpaar mit Spanflächen zugeordnet, wobei die Schneidkantenpaare jeweils einer Flachseite unterschiedlichen Kantenpaaren des Rhombus zugeordnet sind. Mit anderen Worten, auf jeder Seite des Plattenkörpers sind zwei parallele Schneidkanten vorgesehen, wobei die Schneidkanten auf einer Seite des Plattenkörpers den Kanten des Rombus zugeordnet sind, welche auf der gegenüberliegenden Seite keine Schneidkanten aufweist.

Die erfindungsgemäße Fräswendeplatte kann wie übliche Schneidplatten mit zwei Schneidkanten um 180° gedreht werden, um die nächste Schneidkante zum Einsatz zu bringen. Sind beide Schneidkanten einer Seite abgenutzt, wird die erfindungsgemäße Wendeplatte mit der anderen Flachseite gegen die Auflage im Werkzeughalter gesetzt.

Die Rhombusform ermöglicht einen minimalen Materialeinsatz für eine Wendeschneidplatte. Außerdem ist gewährleistet, daß der Einsatz einer Schneidkante keine benachbarte Schneidkante in Mitleidenschaft zieht.

Nach einer Ausgestaltung der Erfindung ist ein mittiger Durchgang für eine Befestigungsschraube vorgesehen. Es sind zwar auch andere Festlege- oder Klemmittel zum Anbringen der erfindungsgemäßen Fräswendeplatte in einem Werkzeughalter denkbar. Die Verwendung einer Befestigungsschraube ist insbesondere wegen der schnellen Wechselmöglichkeit und dem geringen Aufwand vorteilhaft.

Nach einer Ausgestaltung der Erfindung sind die Schneidkanten kurviert, vorzugsweise in einer zu den Auflagerflächen liegenden Ebene konvex. Bei gegebenem Axialwinkel wird erreicht, daß die Schneidkante auf dem Mantel eines Zylinders liegt, wenn sie am Werkzeughalter gedreht wird.

Nach einer weiteren Ausgestaltung der Erfindung sind die Freiflächen ballig kreisförmig mit großem Radius. Sie erzeugt eine Bombierung der Schneidkante und damit einen idealen Verlauf zur Erzeugung einer 90°-Fläche.

Beide Seitenflächen des erfindungsgemäßen Plattenkörpers weisen an die Freifläche angrenzende plane Flächenabschnitte auf. Dadurch ist es möglich, die Platten gegen entsprechende Sitzflächen in Taschen des Werkzeughalters anzulegen und die Schneidplatten sicher gegenüber den auftretenden Belastungen festzulegen.

Die Erfindung wird nachfolgend anhand von Zeichnungen näher erläutert.
- Fig. 1: zeigt die Draufsicht auf eine Fräswendeplatte nach der Erfindung.
- Fig. 2: zeigt die perspektivische Ansicht der Fräswendeplatte nach Fig. 1.
- Fig. 3: zeigt perspektivisch die Seitenansicht einer liegenden Wendeschneidplatte nach den Fign. 1 und 2.
- Fig. 4: zeigt einen Schnitt durch die Darstellung nach Fig. 1 entlang der Linie 4-4.
- Fig. 5: zeigt vergrößert eine Einzelheit des Schnittes nach Fig. 4.
- Fig. 6: zeigt einen Schaftfräser mit Fräswendeplatten nach der Erfindung.
- Fig. 7: zeigt vergrößert die Ansicht des Schaftfräsers nach Fig. 6 mit Draufsicht auf eine Fräswendeschneidplatte nach der Erfindung.

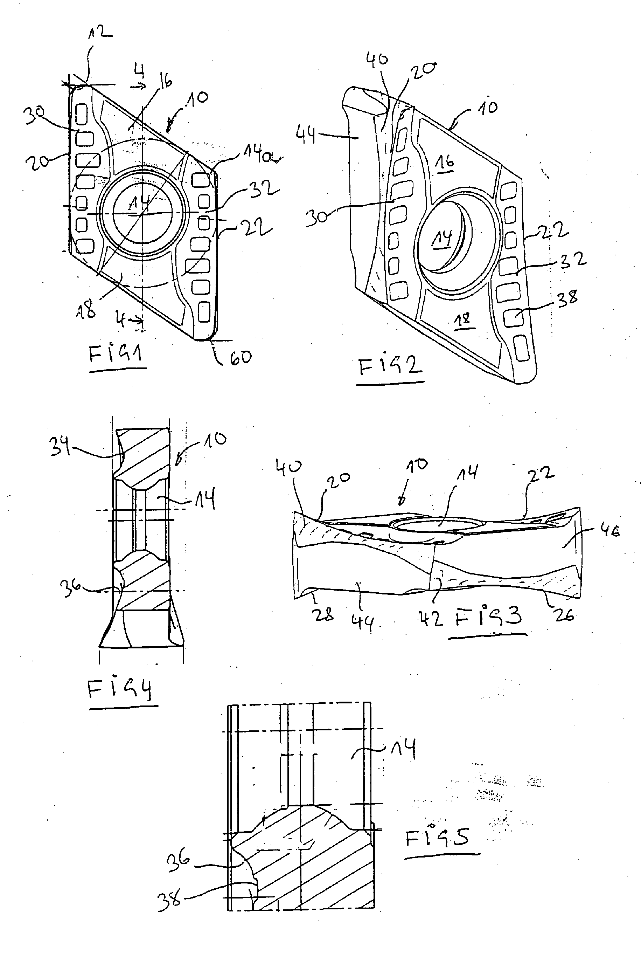

Eine Fräswendeplatte 10 nach den Fign. 1 bis 5 hat eine rhombische Gestalt. Die Rhombuskanten bilden gegenüberliegende spitze Winkel 12 aus und gegenüberliegende stumpfe Winkel 14a. Mittig ist ein Durchgang 14 geformt, auf den weiter unten noch eingegangen wird.

Der rhombische Plattenkörper weist zwei Flachseiten auf. In den Fign. 1 und 2 ist jeweils eine von der Zeichenebene fort gezeigt. Die andere weist in die Zeichenebene hinein. Diametral zum Durchgang 14 gegenüberliegend sind plane Auflagerflächenabschnitte 16, 18 vorgesehen. Zu jeder Flachseite gehört außerdem ein Paar im wesentlichen parallel sich erstreckender Schneidkanten 20, 22. Wie Fig. 3 zeigt, sind auf der anderen Flachseite ebenfalls zwei annähernd parallele Schneidkanten 26, 28 geformt. Mithin weist der Plattenkörper 10 jeweils zwei Paar Schneidkanten auf, wobei jedes Schneidkantenpaar einem anderen Kantenpaar des rhombischen Plattenkörpers 10 zugeordnet ist.

Wie aus den Figuren hervorgeht, sind die Schneidkanten 20, 22 bzw. 26, 28 leicht konvex geformt und außerdem bombiert (siehe hierzu Fig. 2), um bei gegebenem Axialwinkel eine 90°-Fläche zu erzeugen. Die Spanflächen werden von Hohlkehlen 30, 32 gebildet bzw. von Hohlkehlen 34, 36 (siehe Fig. 4), in denen jeweils eine Reihe von flachen Vertiefungen 38 eingeformt sind, die spanbrechende bzw. spanbeeinflussende Eigenschaften aufweisen.

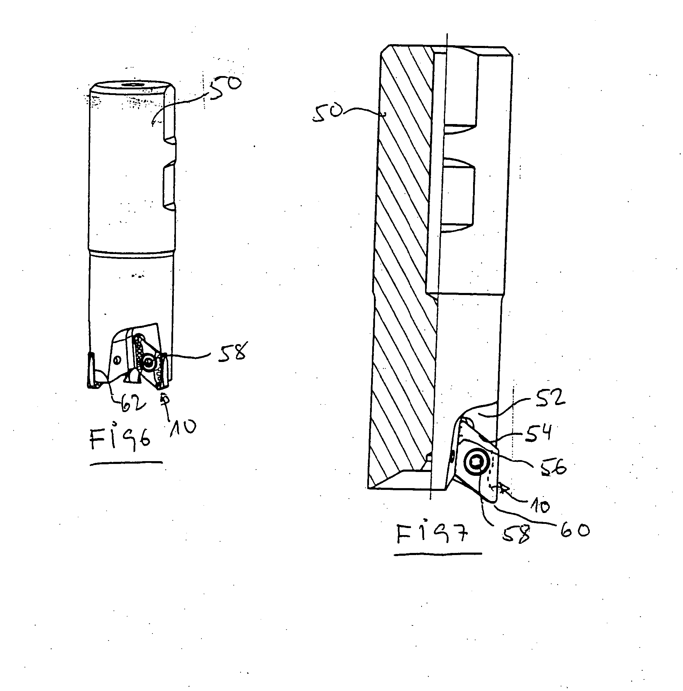

An die Schneidkanten 20, 22 bzw. 26, 28 angrenzend sind Freiflächen 40 bzw. 42 vorgesehen, die leicht ballig geformt sind, wie sich aus der bombierten Form der Schneidkanten ergibt. An die Freiflächen 40, 42 sich anschließend weisen die Seitenflächen des Plattenkörpers 10 plane Anlageabschnitte 44, 46 auf. Sie dienen zur Anlage an Sitzflächen eines Werkzeughalters, wie in den Fign. 6 und 7 gezeigt ist. Außerdem dienen die Anlageflächen 16, 18 zur Anlage an entsprechende Anlageflächen in Taschen des Werkzeughalters.

In den Fign. 6 und 7 ist ein zylindrischer Schaft 50 als Werkzeughalter gezeigt, der am unteren Ende drei im Abstand angeordnete Taschen 52 aufweist. Jede Tasche weist drei Sitzflächen auf. Zwei Sitzflächen 54, 56 dienen für die Anlage der Anlageflächen 44, 46 an den Seitenflächen des Plattenkörpers 10. Die Anlageflächen 18, 16 liegen gegen entsprechende plane Sitzflächen 62 in den Taschen 52 an, die in der Fig. 6 zu erkennen sind. Eine Befestigungsschraube 58 erstreckt sich mit ihrem Schaft durch den Durchgang 14 und wird in entsprechende Aufnahmebohrungen in den Taschen 52 eingeschraubt. Der Durchgang 14 weist konische Eingangsabschnitte auf (siehe Fign. 4 und 5) zur Aufnahme des Kopfes der Befestigungsschraube 58, so daß der Kopf im Plattenkörper versenkt ist.

Wie aus den Figuren ferner zu erkennen, sind die Schneidkanten 20, 22 bzw. 26, 28 im Bereich des spitzen Winkels 12 verrundet und mit einem entsprechenden Radius versehen, wie bei 60 in Fig. 1 angezeigt.

Wie erkennbar, weist die gezeigte Wendeschneidplatte vier voneinander unabhängige Schneidkanten auf, die sich somit bei dem Einsatz einer Schneidkante nicht gegenseitig beeinträchtigen. Der Materialeinsatz erweist sich bei der Rhombenform als minimal. Außerdem ist auch die Dicke des Plattenkörpers 10 gering. Dadurch lassen sich auf einem vorgegebenen Teilkreis mehr Platten auf dem Werkzeughalter unterbringen als dies bei herkömmlichen Wendeschneidplatten der Fall ist, welche ebenfalls vier Schneidkanten aufweisen.

## Patentansprüche

1. Fräswendeplatte, die vorzugsweise unter einem von Null verschiedenen Axialwinkel an einem drehbaren Werkzeughalter befestigbar ist und die von einem trapezoiden Plattenkörper gebildet ist, mit einer im wesentlichen planen Auflagefläche, einer dieser gegenüberliegenden im wesentlichen weiteren planen Fläche und mit zwischen diesen ausgebildeten Seitenflächen sowie gegenüberliegenden Schneidkanten mit zugeordneten Spanflächen und an diesen angrenzenden Freiflächen, wobei die Spanflächen durch jeweils eine eingearbeitete Hohlkehle und die Freifläche von je einer Seitenfläche des Plattenkörpers gebildet sind, **dadurch gekennzeichnet, daß** der Plattenkörper (10) in Form eines gleichseitigen Rhombus vorgesehen ist mit Schneidkanten (20, 22, 26, 28) an allen Kanten des Rhombus, wobei jeder Flachseite jeweils zwei annähernd parallele Schneidkanten (20, 22, 26, 28) mit zugeordneten Spanflächen vorgesehen sind und die Schneidkantenpaare jeweils einer Flachseite unterschiedlichen Kantenpaaren des Rhombus zugeordnet sind.

2. Fräswendeplatte nach Anspruch 1, **dadurch gekennzeichnet, daß** ein mittiger Durchgang (14) für eine Befestigungsschraube (58) vorgesehen ist.

3. Fräswendeplatte nach Anspruch 2, **dadurch gekennzeichnet, daß** der Durchgang (14) konische Eingangsabschnitte an gegenüberliegenden Enden aufweist.

4. Fräswendeplatte nach einem der Ansprüche 1 bis 3, **dadurch gekennzeichnet, daß** die Schneidkanten (20, 22, 26, 28) kurviert sind, vorzugsweise in einer zu den Auflagefläche liegenden Ebene konvex sind.

5. Fräswendeplatte nach einem der Ansprüche 1 bis 4, **dadurch gekennzeichnet, daß** die Hohlkehlen (30, 32, 34, 36) eine Reihe von Vertiefungen (32) aufweisen.

6. Fräswendeplatte nach einem der Ansprüche 1 bis 5, **dadurch gekennzeichnet, daß** alle Seitenflächen an die Freiflächen (40, 42) angrenzend plane Flächenabschnitte (44, 46) als Anlageflächen für Sitzflächen in einem Werkzeughalter aufweisen.

7. Fräswendeplatte nach einem der Ansprüche 1 bis 6, **dadurch gekennzeichnet, daß** die Freiflächen (40, 42) ballig kreisförmig sind mit großem Radius.

8. Fräswendeplatte nach einem der Ansprüche 1 bis 7, **dadurch gekennzeichnet, daß** die Schneidkanten (20, 22, 26, 29) an den spitzen Winkeln der Rhombuskanten einen Radius (60) aufweisen.
